# EUROPÄISCHE PATENTSCHRIFT

(11) **EP 2 439 644 B1**
(45) Veröffentlichungstag und Bekanntmachung des Hinweises auf die Patenterteilung: **20.03.2013**
(21) Anmeldenummer: 10009933.2
(22) Anmeldetag: 20.09.2010
(51) Int. Cl.: G06F 11/22, G06F 11/16, G09G 3/00, G06F 11/267

(54) **Verfahren zur Kennzeichnung sicherheitsrelevanter und nichtsicherheitsrelevanter Bildschirmseiten auf einem Anzeigegerät mittels eines optischen Markers**
Method for marking screen pages that are secure and not secure on a display device using an optical marker
Procédé de marquage de pages d'écran relatives et non relatives à la sécurité sur un appareil d'affichage à l'aide d'un marqueur optique

(43) Veröffentlichungstag der Anmeldung: 11.04.2012
(73) Patentinhaber: Pixy AG, 5417 Untersiggenthal (CH)
(72) Erfinder: Gruenert, David Manuel, 8406 Winterthur (CH); Haag, Stephan, 8965 Berikon (CH)
(74) Vertreter: Schaad, Balass, Menzl & Partner AG

(56) Entgegenhaltungen:
- WO-A1-2007/071378
- WO-A2-2007/033902
- WO-A2-2007/054275
- US-A1- 2004 145 598

## Beschreibung

Die vorliegende Erfindung betrifft ein Verfahren zur Kennzeichnung sicherheitsrelevanter und nichtsicherheitsrelevanter Bildschirmseiten auf einem Anzeigegerät mittels eines optischen Markers.

In modernen Fahrzeugen, insbesondere Schienenfahrzeugen, sind die Führerstände zunehmend mit Anzeigegeräten ausgestattet, welche Bildschirme aufweisen, die auf Basis der LCD (Liquid Cristal Display) Technologie ausgestattet sind. Entsprechend müssen sicherheitsrelevante Basisdaten, wie beispielsweise die Geschwindigkeit, die Temperatur, der Druck, der Ölstand oder der Zustand des Bremssystems, digital auf dem Bildschirm des Anzeigegerätes im Führerstand angezeigt werden.

Die Sicherheitsanforderungen für sicherheitsrelevante Hardware und Software werden im Schienenverkehr durch die Sicherheitsnormen EN 50126, EN 50128 und EN 50129 definiert. Die Darstellung der Geschwindigkeit, beispielsweise, auf dem Bildschirm des Anzeigegerätes wird gemäss der vorgesehenen Sicherheitsnorm als Sicherheitsstufe SIL ("safety-integrity level")-2 eingestuft, während die Überwachung des Bremssystems die Sicherheitsstufe SIL-4 erfüllen muss.

Die Sicherheitsstufe SIL-2 besagt, dass der Benutzer des Anzeigegerätes im Schienenverkehr informiert werden muss, sobald die Sicherheitsstufe SIL-2 nicht erfüllt ist. Jedoch muss vom Sicherheitssystem selbst keine Massnahme getroffen werden. Bei der Sicherheitsanforderung für die Sicherheitsstufe SIL-4 hingegen muss beispielsweise das Bremssystem als Sicherheitssystem sofort reagieren.

Bei vorliegender Erfindung wird der Fokus auf die Sicherheitsstufe SIL-2 gelegt, so dass sicherheitsrelevante Basisdaten, wie beispielsweise die Geschwindigkeit auf dem Bildschirm des Anzeigegerätes richtig angezeigt werden.

Die Druckschrift DE 10 2005 011 942 offenbart ein Verfahren zur Fehleroffenbarung bei Anwendung einer sicherheitsrelevanten Anzeige mit einem ersten, über eine erste Datenquelle angesteuerten Anzeigeelement und einem zweiten, über eine zweite Datenquelle angesteuerten Anzeigeelement zur Darstellung eines erfassten Messwertes. Das erste Anzeigeelement ist gegenüber dem zweiten Anzeigeelement verdeckbar, und bei fehlender Überdeckung der beiden Anzeigeelemente erfolgt eine Fehleroffenbarung an den Benutzer.

Die Druckschrift DE 10 2004 039 498 offenbart ein Verfahren zur Überwachung des Zustandes eines LCD-Displays, insbesondere des eingefrorenen Zustandes dieses Displays, wobei die Anbringung eines Lichtsensors in einem kleinen Bereich erfolgt, in welchem der Display-Steuerungscomputer ein bestimmtes, wechselndes Bitmuster erzeugt und das Ausgangssignal des Lichtsensors zum Eingang eines unabhängigen Controllers führt. Der Controller erhält die Bitmusterdaten vom Steuercomputer und vergleicht diese mit dem Bitmuster vom Lichtsensor. Bei mangelnder Übereinstimmung zwischen dem vom Steuerungscomputer erhaltenen Bitmuster und dem Bitmuster vom Lichtsensor wird ein Alarm ausgelöst.

Ein weiteres Verfahren zur Darstellung von sicherheitsrelevanten Basisdaten an Bildschirmen von Anzeigegeräten wird in Dokument DE 102 52 124 offenbart, wobei die Geschwindigkeit eines Fahrzeuges mittels eines analogen Zeigerinstrumentes dargestellt wird und parallel entweder die gleiche Geschwindigkeit des Fahrzeugs oder eine weitere Geschwindigkeit des Fahrzeugs zur Überprüfung auf einem digitalen Feld zur Darstellung gebracht wird. Das digitale Feld wird mittels einer Rückleseeinrichtung unter Zuhilfenahme einer Bildpixelauswertung mit gespeicherten Vergleichswerten überprüft.

Dokument W02007054275 offenbart einen Verfahren zum Überwachen der Ansteuerung von Bilddarstellungen, insbesondere aus sicherheitsrelevanten Rohdaten, wobei zur Kontrolle der Funktion der sicherheitsrelevanten Rohdaten, insbesondere Sensordaten, erfolgenden Grafikgenerierung, etwa unter geometrischer Transformation und Bildfilterung, zusätzlich zu den vor verarbeiteten Rohdaten noch Testvektoren verarbeitet und die daraus resultierenden Videodaten mit den Erwartungswerten verglichen werden, um auf etwaige Fehlfunktionen schliessen zu können. Das erübrigt ein aufwändiges Rückrechnen der Videodaten zum Vergleich mit den ihnen zugrunde liegenden Grafikinstruktionen oder Rohdaten.

Bei der Überwachung von Bildschirmseiten auf digitalen Anzeigegeräten, welche sicherheitsrelevante pixelformatierte Displaydaten aufweisen, besteht die Gefahr, dass auch nichtsicherheitsrelevante pixelformatierte Displaydaten mitgeprüft werden. Dies hat zur Folge, dass einem Überwacher ein enormes Datenvolumen zugeführt wird. Entsprechend hat der Überwacher einen erhöhten Leistungsaufwand, um die Daten auszuwerten. Dies wiederum führt zu erhöhten Kosten für die Hardware.

Der vorliegenden Erfindung liegt die Aufgabe zugrunde, ein Verfahren zur Kennzeichnung von sicherheitsrelevanten und nichtsicherheitsrelevanten Bildschirmseiten auf einem Anzeigegerät zu ermöglichen, so dass eine Überprüfung von nichtsicherheitsrelevanten Bildschirmseiten gar nicht erst durchgeführt werden muss.

Die Aufgabe wird gelöst durch das Verfahren gemäss Anspruch 1.

Ein erfindungsgemässes Verfahren zur Kennzeichnung sicherheitsrelevanter und nichtsicherheitsrelevanter Bildschirmseiten auf einem Anzeigegerät, insbesondere einem LCD Monitor im Führerstand eines Fahrzeuges, wird mittels eines optischen Markers realisiert. Hierzu werden von einem Rechner aus zugeführten sicherheitsrelevanten und nichtsicherheitsrelevanten Basisdaten die einer gewählten Bildschirmseite zugeordneten Basisdaten in pixelformatierte Displaydaten umgewandelt. Die pixelformatierten Displaydaten wiederum werden einem Bildschirm des Anzeigegerätes zur Anzeige zugeführt. Für den Fall, dass die gewählte Bildschirmseite sicherheitsrelevante Displaydaten aufweist, integriert der Rechner in die pixelformatierten Displaydaten einen ersten optischen Marker. Für den Fall, dass die gewählte Bildschirmseite ausschliesslich nicht sicherheitsrelevante Displaydaten aufweist, integriert der Rechner in die pixelformatierten Displaydaten einen zweiten optischen Marker. Der erste und der zweite optische Marker weisen Informationsmerkmale auf, mit welchen ein Überwacher die sicherheitsrelevanten Bildschirmseiten von den nichtsicherheitsrelevanten Bildschirmseiten unterscheidet. Zur Überprüfung der allenfalls der ausgewählten Bildschirmseite zugeordneten sicherheitsrelevanten pixelformatierten Displaydaten werden vor dem Anzeigegerät die pixelformatierten Displaydaten abgegriffen und dem Überwacher zugeführt. Der Überwacher vergleicht den in den ihm zugeführten pixelformatierten Displaydaten integrierten optischen Marker mit vordefinierten Markerreferenzdaten. Bei Feststellen des Vorhandenseins des zweiten optischen Markers wird die Überprüfung ausgeschaltet. Bei Feststellen des Vorhandenseins des ersten optischen Markers hingegen, sowie bei fehlender Übereinstimmung des optischen Markers mit den Markerreferenzdaten wird eine Kontrolle durchgeführt.

Vorteil eines derartigen Verfahrens ist die klare Unterscheidungsmöglichkeit zwischen sicherheitsrelevanten Bildschirmseiten und nichtsicherheitsrelevanten Bildschirmseiten auf dem Anzeigegerät. Entsprechend wird der zeitliche und hardwaremässige Aufwand erheblich reduziert, da nur noch sicherheitsrelevante Bildschirmseiten überprüft werden müssen. Auf den nichtsicherheitsrelevanten Bildschirmseiten können die vordefinierten Regionen, welche eben keine sicherheitsrelevanten Displaydaten aufweisen, mit anderen Daten, zur Darstellung für den Benutzer, versehen sein. Da der Überwacher bei Vorhandensein von ausschliesslich nichtsicherheitsrelevanten Displaydaten auf der gewählten Bildschirmseite den zweiten optischen Marker mittels der Markerreferenzdaten und der Informationsmerkmale erkennt, wird die Überprüfung in diesem Fall ausgeschaltet. Dies hat den Vorteil, dass der Überwacher nicht aktiv ist, wenn es nicht wirklich nötig ist.

Bei einer bevorzugten Ausführungsform besteht der in den pixelformatierten Displaydaten integrierte optische Marker aus einer Abfolge vordefinierter Pixelmuster und befindet sich insbesondere an einer fest definierten Stelle auf den Bildschirmseiten. Dies hat den Vorteil, dass der Überwacher immer an der fest definierten Stelle auf der gewählten Bildschirmseite die Kontrolle für den in den pixelformatierten Displaydaten integrierten optischen Marker durchführen kann. Entsprechend kann auf die Suche nach sicherheitsrelevanten Displaydaten auf der restlichen Bildschirmseite verzichtet werden, wenn nach der Kontrolle des optischen Markers schon fest steht, dass keine sicherheitsrelevanten Displaydaten vorhanden sind.

Vorzugsweise weist der zweite optische Marker eine andere Abfolge von Pixelmustern auf als der erste optische Marker. Dies unterstützt die Abgrenzung der sicherheitsrelevanten Bildschirmseiten von den nichtsicherheitsrelevanten Bildschirmseiten. Der Überwacher kann anhand der Abfolge erkennen, ob es sich um den ersten optischen Marker oder den zweiten optischen Marker handelt, da die Abfolge charakteristische Informationsmerkmale aufweist, die vom Überwacher gelesen werden können. Für den Fall, dass der optische Marker auch für einen Benutzer sichtbar ist, kann dieser die Abfolge ebenfalls mitüberwachen.

Bei einer bevorzugten Ausführungsform überwacht der Überwacher die Abfolge der Pixelmuster des optischen Markers. Auf Grund der Informationsmerkmale, welche den optischen Marker spezifizieren, kann der Überwacher die jeweilige Abfolge des optischen Markers korrekt zuordnen. Ein weiterer Vorteil ist für den Benutzer gegeben, denn falls die Abfolge der Pixelmuster am gewählten Bildschirm nicht korrekt ist, kann der Benutzer dies ebenfalls erkennen und Massnahmen einleiten.

Gleichzeitig oder alternativ überwacht der Überwacher vorzugsweise den zeitlichen Abstand der Pixelmuster des optischen Markers. Mittels der zeitlichen Überwachung des Pixelmusters ist es nicht nur für den Überwacher, sondern auch für den Benutzer möglich, eine visuelle Kontrolle durchzuführen, ob der dargestellte optische Marker am Bildschirm des Benutzers funktioniert oder einen Fehler aufweist.

Zusätzlich oder alternativ führt der Überwacher vorzugsweise bei fehlender Übereinstimmung des zeitlichen Abstandes der Pixelmuster des optischen Markers mit Markerreferenzdaten die Kontrolle durch.

Bei einer bevorzugten Ausführungsform sendet der Überwacher bei Feststellen des Vorhandenseins eines optischen Markers ein Signal an das Anzeigegerät und/oder an ein externes Gerät, um dem Benutzer anzuzeigen, dass optische Marker vorhanden sind, beispielsweise durch Einschalten einer Markeranzeigelampe, insbesondere einer Marker LED.

Besonders bevorzugte Ausführungsformen der Erfindung werden im Folgenden anhand der Zeichnung erläutert.

Es zeigen rein schematisch:
- Fig. 1: ein Blockschaltbild eines Anzeigegerätes zur Überprüfung von pixelformatierten Displaydaten mittels eines Überwachers,
- Fig. 2: ein Blockschaltbild des Überwachers im Detail,
- Fig. 3: ein Komprimierverfahren für die Umwandlung von pixelformatierten Displaydaten in komprimierte Displaydaten am Beispiel einer Geschwindigkeit eines Fahrzeugs,
- Fig. 4: ein Auflösungsreduktionsverfahren bei dem ein mehrere Pixel aufweisendes Teilfeld auf 1 bit reduziert wird,
- Fig. 5: eine sicherheitsrelevante Bildschirmseite unter optionaler Verwendung eines ersten optischen Markers,
- Fig. 6: eine nichtsicherheitsrelevante Bildschirmseite unter optionaler Verwendung eines zweiten optischen Markers.

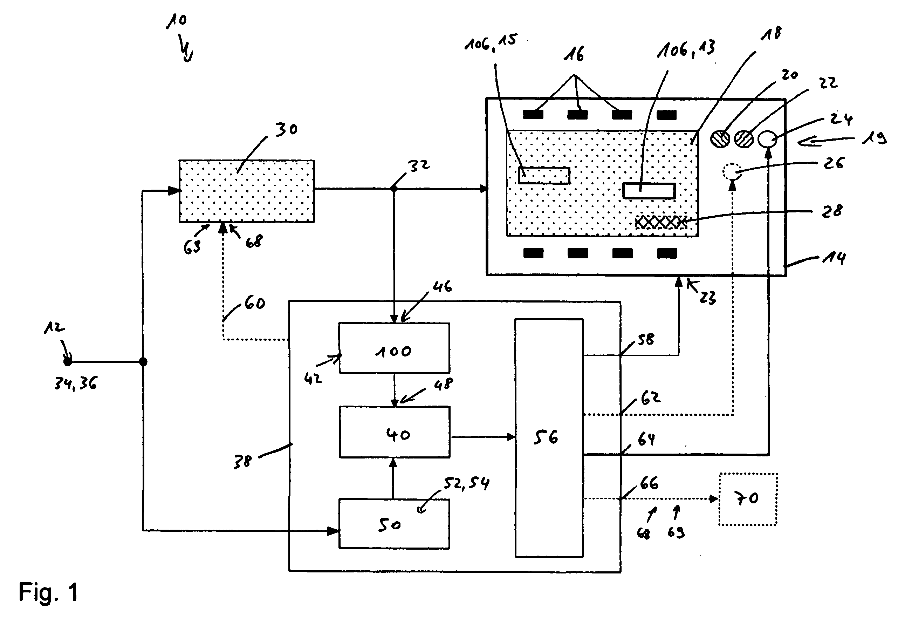

Ein in Fig. 1 beispielhaft gezeigtes Anzeigegerät 10, welches für den Einsatz im Führerstand eines Fahrzeuges, insbesondere eines Schienenfahrzeuges, vorgesehen ist, stellt Basisdaten 12 in einer für die jeweilige Anwendung geeigneten Form auf einem Bildschirm 14 dar.

Der Bildschirm 14 weist Bedienelemente 16 auf, mittels derer ein Benutzer des Anzeigegerätes 10, je nach Situation, in welcher sich das Fahrzeug befindet, eine gewählte Bildschirmseite 18 auf dem Bildschirm 14 des Anzeigegerätes 10 zur Darstellung bringen kann. Beispielsweise kann in einem Bahnhof die Stellung der Türen als Bildschirmseite 18 ausgewählt werden, wohingegen während der Fahrt die Geschwindigkeit des Fahrzeugs auf einer anderen gewählten Bildschirmseite 18 dargestellt werden kann. Mittels am Bildschirm 14 angebrachten Signallampen 19, insbesondere LED's 20, 22, 24, 26 können dem Benutzer Statusinformationen dargestellt werden.

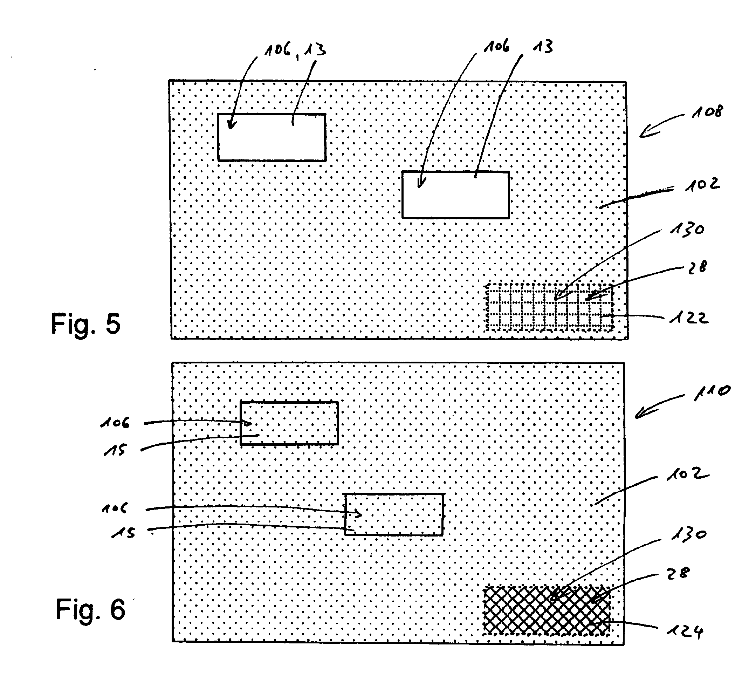

Weiter ist im Bildschirm 14 in der Bildschirmseite 18 ein optischer Marker 28 sowie die Kennzeichnung einer sicherheitsrelevanten Region 13 und einer nichtsicherheitsrelevanten Region 15 gezeigt. Die Funktionsweise dieser Elemente wird im Detail im Zusammenhang mit der Beschreibung der Fig. 5 und Fig. 6 erläutert.

Die Basisdaten 12, welche auf dem Bildschirm 14 zur Darstellung gelangen sollen, werden über ein Feldbussystem wie beispielsweise den CAN-Bus, den MVB (Multi-Vehical-Bussystem) oder über eine Ethernetdatenleitung an einen Rechner 30 im Anzeigegerät 10 übermittelt. Der Rechner 30 visualisiert die Basisdaten 12 am Bildschirm 14, indem mittels einer Software die Basisdaten 12 in pixelformatierte Displaydaten 32 umgewandelt werden. Die Software kann beispielsweise auf einem Betriebssystem im Rechner 30, wie beispielsweise Linux, ausgeführt werden.

Bei den Basisdaten 12 kann zwischen sicherheitsrelevanten Basisdaten 34, wie beispielsweise der Geschwindigkeit, und nichtsicherheitsrelevanten Basisdaten 36, wie beispielsweise dem Füllstand eines Wassertanks, unterschieden werden. Die sicherheitsrelevanten Basisdaten 34 müssen die Sicherheitsstufe SIL-2 erfüllen, wie in der Einleitung ausgeführt. Sie müssen auch entsprechend der Sicherheitsstufe SIL-2 übermittelt werden.

Der Rechner 30 selbst genügt nicht den Sicherheitsanforderungen des Schienenverkehrs, da die Umwandlung von sicherheitsrelevanten Basisdaten 34 in pixelformatierte Displaydaten 32 lediglich die Sicherheitsstufe SIL-0 (punktiert dargestellte Flächen in Fig. 1) erfüllt. Somit müssen die pixelformatierten Displaydaten 32 vor dem Zuführen zum Bildschirm 14 des Anzeigegerätes 10 abgegriffen und in einem Überwacher 38, welcher die Sicherheitsstufe SIL-2 (unschraffiert dargestellte Flächen in Fig. 1) erfüllt, geprüft werden.

Vor der Überprüfung der pixelformatierten Displaydaten 32 in einem Überprüfer 40 des Überwachers 38 werden die pixelformatierten Displaydaten 32 mittels eines Komprimierverfahrens 42 in komprimierte Displaydaten 44 umgewandelt. Dabei werden ausschliesslich die sicherheitsrelevanten pixelformatierten Displaydaten 46 in sicherheitsrelevante komprimierte Displaydaten 48 umgewandelt.

Dem Überwacher 38 stehen ausserdem die gleichen sicherheitsrelevanten Basisdaten 34 zur Verfügung wie dem Rechner 30. In einem Speicher 50 des Überwachers 38 ist ein Referenzdatensatz 52 mit vordefinierten sicherheitsrelevanten komprimierten Referenzdisplaydaten 54 gespeichert. Die sicherheitsrelevanten Basisdaten 34 bestimmen im Überwacher 38, welche vordefinierten sicherheitsrelevanten komprimierten Referenzdisplaydaten 54 aus dem Referenzdatensatz 52 dem Überprüfer 40 zugeführt werden. Der Speicher 50 kann in einem Speichermedium, insbesondere in einem Flash, abgelegt sein.

Die dem Überprüfer 40 zugeführten, vordefinierten sicherheitsrelevanten komprimierten Referenzdisplaydaten 54 und sicherheitsrelevanten komprimierten Displaydaten 48 werden miteinander verglichen. Nach einer Auswertung 56 dieser Überprüfung werden anschliessend entsprechende Signalisierungen eingeleitet. Der Überwacher 38 weist Ausgänge 58, 60, 62, 64, 66 für die Einleitung der entsprechenden Signalisierungen auf.

Im Falle einer fehlenden Übereinstimmung von den sicherheitsrelevanten komprimierten pixelformatierten Displaydaten 48 mit den sicherheitsrelevanten komprimierten Referenzdisplaydaten 54 bei der Überprüfung, wird dies dem Benutzer mittels eines ersten Signals 64 am Anzeigegerät 10, insbesondere durch die Signallampen 19, kenntlich gemacht. Dabei können beispielsweise die SIL-2 LED 24 bzw. optional die Marker LED 26 oder ein externes Gerät 70 für die Signalisierung verwendet werden. Es kann optional auch dem Rechner 30 das Ergebnis der fehlgeschlagenen Überprüfung signalisiert werden. Eine weitere Fehleroffenbarung bei fehlerhafter Überprüfung ist das Abschalten der Hintergrundbeleuchtung 23 durch den Überwacher 38.

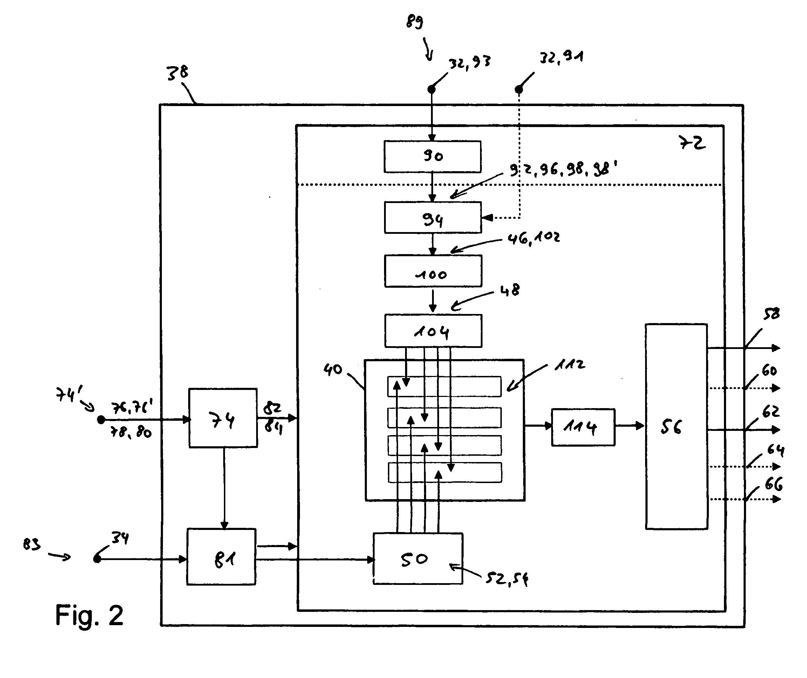

Der in Fig. 2 gezeigte Überwacher 38 erhält, wie zu Fig. 1 ausgeführt, die gleichen sicherheitsrelevanten Basisdaten 34 wie der Rechner 30, welcher aus den sicherheitsrelevanten Basisdaten 34 pixelformatierte Displaydaten 32 generiert. Die vor dem Zuführen zum Bildschirm 14 des Anzeigegerätes 10 abgegriffenen, pixelformatierten Displaydaten 32 werden dem Überwacher 38 ebenfalls zugeführt.

Ein im Anzeigegerät 10 bzw. im Überwacher 38 integriertes Modul 72', welches fortan als AIM (Anzeige-Integritäts-Modul) 72 bezeichnet wird, ist Bestandteil des Überwachers 38 und zuständig für die Verarbeitung der sicherheitsrelevanten Basisdaten 34 und der pixelformatierten Displaydaten 32. Das AIM 72 kann insbesondere als FPGA (Field Programmable Gate Array), DSP (Digital Signal Processor), CPU (Central Processing Unit) oder als ASIC (Application Specific Intergrated Circuit) ausgeführt sein.

Die Daten, welche vom AIM 72 gelesen werden sollen, müssen im Falle eines zum AIM 72 inkompatiblen Datenformats vorab umgewandelt werden. Mittels eines Konfigurators 74 können Konfigurationsdaten 76, wie beispielsweise Referenzdaten 78 und/oder Initialisierungsparameter 80, an das AIM 72 übermittelt und im Speicher 50 gespeichert werden. Jedoch müssen diese Konfigurationsdaten 76 in der Regel zunächst einen Kontroller 81 durchlaufen, insbesondere dann, wenn die Konfigurationsdaten 76 nicht AIM 72 kompatibel sind. Zum AIM 72 kompatible Daten können beispielsweise RGB666 Daten 91 sein, wie in Fig. 2 gestrichelt gezeigt. AIM 72 gerätespezifische Konfigurationsdaten 76', wie beispielsweise ein Timer 82 oder eine Resetfunktion 84, können vom Konfigurator 74 direkt an das AIM 72 gesendet werden.

Beim erfindungsgemässen Verfahren wird vorzugsweise der Referenzdatensatz 52 im Konfigurationsmodus 74' mit vordefinierten sicherheitsrelevanten komprimierten Referenzdisplaydaten 54 im Speicher 50 gespeichert.

Beim Wechseln vom Konfigurationsmodus 74' in einen Lademodus, werden die Konfigurationsdaten 76 und Initialisierungsparameter 80 von den jeweiligen Hardwarekomponenten des Überwachers 38 bzw. AIM 72 gelesen, wobei vorab das AIM 72 zurückgesetzt und der Speicher 50 überprüft wird, um sicher zu gehen, dass kein Fehler im Speicher 50 vorliegt.

Im Betriebsmodus 89 des Überwachers 38, bzw. des AIM 72, können nun die abgegriffenen, pixelformatierten Displaydaten 32 ebenso wie die sicherheitsrelevanten Basisdaten 34 vom AIM 72 gelesen werden. Da die pixelformatierten Displaydaten 32 beispielsweise sogenannte serielle LVDS (Low Voltage Differential Signals) Daten 93 sein können, welche nicht kompatibel mit dem AIM 72 Datenformat sind, müssen diese pixelformatierten Displaydaten 32 allenfalls mittels eines Datenwandlers 90 in parallele Videodaten 92 umgewandelt werden (dieser Pfad ist in Fig. 2 gezeigt). Vom Datenwandler 90 werden insbesondere 18 bit und 24 bit LVDS pixelformatierte Displaydaten 32 als Eingangsdaten akzeptiert. Im Konfigurationsmodus 74' können die Auflösung und Farbtiefe der Videodaten 92 eingestellt werden.

Wie in Fig. 2 gezeigt, kann der Datenwandler 90 entweder als Teil des AIMs 72 auf dem FPGA bzw. ASIC aufgebracht sein, oder aber separat (gestrichelt in Fig.2) vom ASIC bzw. FPGA im Überwacher 38 angeordnet sein.

Die vom Datenwandler 90 aus den pixelformatierten Displaydaten 32 erzeugten Videodaten 92 werden einem Fensterfilter 94 zugeführt. Der Fensterfilter 94 erkennt die Videodaten 92, welche für die vom Benutzer ausgewählte Bildschirmseite 18 generiert wurden und auf dem Bildschirm 14 des Anzeigegerätes 10 zur Darstellung gelangen sollen. Alle nicht aktiven pixelformatierten Displaydaten 96 und sogenannte Bildschirmsteuerungssignale 98, wie beispielsweise ein Zeilenanfangssignal 98', werden vom Fensterfilter 94 herausgefiltert. Im Konfigurationsmodus 74' kann der nicht angezeigte Bereich für Bildschirmseiten 18, insbesondere der Bereich für die Bildschirmsteuersignale 98, festgelegt werden.

Es ist auch denkbar, dass vor dem Bildschirm 14 des Anzeigegerätes 10 parallele Videodaten 92, wie beispielsweise RGB666 Daten 91, abgegriffen werden, welche keine Datenumwandlung erfordern und direkt dem Fensterfilter 94 zugeführt werden können, wie in Fig. 2 gestrichelt gezeigt.

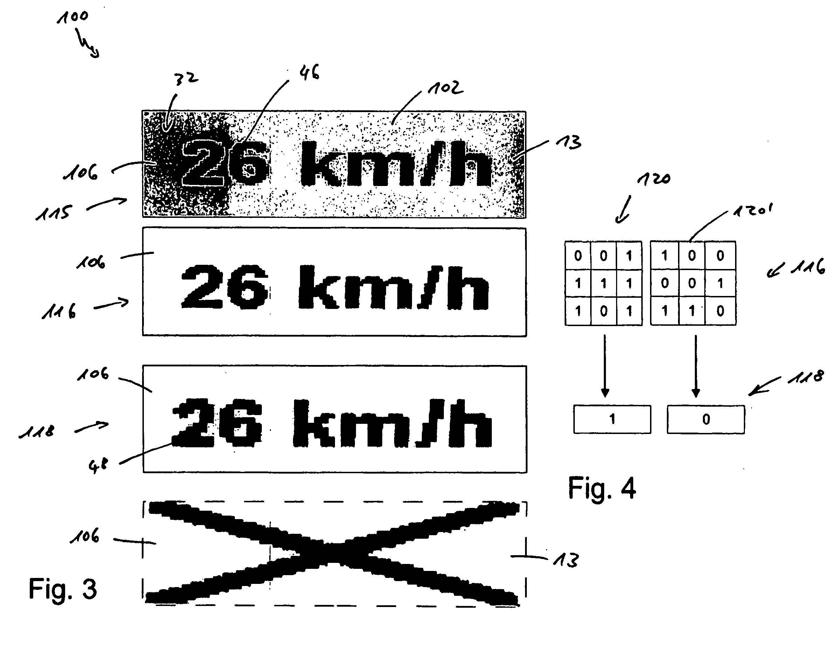

Die nun auf die Bildschirmseite 18 reduzierten, pixelformatierten Displaydaten 32 werden mittels eines Kompressors 100 weiterverarbeitet. Der Kompressor 100 verringert die Farbtiefe einzelner Pixel und/oder fasst mehrere Pixel in einem Pixel zusammen, wie anschaulich in Fig. 3 gezeigt und im Detail in der Figurenbeschreibung zu Fig. 3 erläutert ist. Die Kompressionsrate für die Reduktion der Farbtiefe und die Reduktion der Auflösung können im Konfigurationsmodus 74' festgelegt werden.

Da im Kompressor 100 die sicherheitsrelevanten pixelformatierten Displaydaten 46 und die nichtsicherheitsrelevanten pixelformatierten Displaydaten 102 komprimiert wurden, müssen die sicherheitsrelevanten Regionen 13 (siehe Fig. 1) auf der Bildschirmseite 18 und welche ausschliesslich die sicherheitsrelevanten komprimierten pixelformatierten Displaydaten 48 aufweisen, mittels eines Regionenfilters 104 herausgefiltert werden. Somit filtert der Regionenfilter 104 sämtliche abgegriffenen pixelformatierten Displaydaten 32 bis auf die sicherheitsrelevanten Displaydaten 46, welche sich in den sicherheitsrelevanten Regionen 13 befinden heraus. Anschaulich sind entsprechende Regionen 106 in Fig. 5 für sicherheitsrelevante Bildschirmseiten 108 dargestellt. Im Konfigurationsmodus 74' kann die Position der sicherheitsrelevanten Regionen 13 auf vordefinierten Bildschirmseiten 18 mittels einer Identifikationsnummer festgelegt werden.

Es ist zu bemerken, dass die Abfolge der oben genannten Filter beim Komprimierverfahren 42 beliebig gewählt werden kann. Somit ist es auch denkbar, dass die Videodaten 92 nach dem Fensterfilter 94 eine erneute Filterung durch den Regionenfilter 104 erhalten und dann erst der Kompressor 100 zum Einsatz kommt. Entsprechend würden dem Überprüfer 38 aus dem Kompressor 100 ausschliesslich sicherheitsrelevante komprimierte Displaydaten 48 in den entsprechenden sicherheitsrelevanten Regionen 13 zugeführt.

Die in den sicherheitsrelevanten Regionen 13 befindlichen, sicherheitsrelevanten komprimierten Displaydaten 48 werden dem Überprüfer 40 in separaten Registern 112 zugeführt. Anschliessend vergleicht der Überprüfer 40 die sicherheitsrelevanten komprimierten Displaydaten 48 mit den sicherheitsrelevanten komprimierten Referenzdisplaydaten 54, welche durch die sicherheitsrelevanten Basisdaten 34 bestimmt und dem Überprüfer 38 aus dem Speicher 50 im Betriebsmodus 89 zugeführt wurden.

Ein Zwischenregister 114 zwischen dem Überprüfer 40 und der Auswertung 56 erlaubt eine Art Pufferung der Vergleichsergebnissen aus dem Überprüfer 38. Dies kann notwendig sein, wenn beispielsweise zwischen einer Geschwindigkeit 26 km/h auf eine andere Geschwindigkeit 27 km/h gewechselt wird und der Rechner entsprechend Zeit benötigt, um diese neue Geschwindigkeit auf dem Bildschirm 14 des Anzeigegerätes 10 zur Darstellung zu bringen. Auch beim Wechseln der Bildschirmseite 18 benötigt der Rechner Zeit, um die Darstellung umzusetzen, so dass auch hier die Pufferung notwendig ist. Da die Überprüfung etwa 20 ms dauert, was für das menschliche Auge zu schnell ist, dient der Zwischenspeicher 114 ebenso auch dem Benutzer, damit dieser die pixelformatierten Displaydaten 32 auf dem Bildschirm 14 ausreichend lang betrachten kann, um diese korrekt wahrzunehmen.

Die vom Zwischenspeicher 114 an die Auswertung 56 weitergereichten, durch den Überprüfer 40 geprüften, sicherheitsrelevanten Regionen 106 führen zu der Signalisierung seitens des Überwachers 38, wie im Zusammenhang mit Fig. 1 schon ausgeführt wurde.

In Fig. 3 wird die Geschwindigkeit des Fahrzeugs von 26 km/h in Form von pixelformatierten Displaydaten 32 in der sicherheitsrelevanten Region 13 angezeigt. Das heisst, dass die pixelformatierten Displaydaten 32 entsprechend, mittels des Fensterfilters 94 und des Regionenfilters 104 vorab gefiltert wurden, so dass sie auf der Bildschirmseite 18 in der betreffenden sicherheitsrelevanten Region 13 angeordnet sind. Dieser erste Zustand 115 entspricht dem Zustand nach der Datenumwandlung von seriellen LVDS 93 in parallele Videodaten 92 bzw. nach der direkten Zuführung von beispielsweise RGB666 Daten 91, sodass entweder 18 bit oder 24 bit Videodaten 92 vorliegen.

In einem ersten Kompressionsschritt 116 wird die Farbtiefe von 18 bit bzw. 24 bit über eine 8 bit Graustufe auf eine Graustufe kleiner als 8 bit, insbesondere auf eine 1 bit Schwarzweissstufe pro Pixel, reduziert (in Fig. 3, zweite Zustandsaufnahme von oben).

In einem zweiten Kompressionsschritt 118 werden mehrere Pixel aufweisende Teilfelder 120, wie in Fig. 4 gezeigt, auf 1 Pixel reduziert. Dabei werden beispielsweise drei mal drei Teilfelder 120' mit jeweils einer Pixelinformation gewichtet zusammengefasst (in Fig. 3, dritte Zustandsaufnahme von oben), was einer Reduktion der Auflösung beispielsweise um etwa den Faktor 9 entspricht. Es ist auch denkbar, eine Reduktion der Auflösung von beispielsweise einem fünf mal fünf Teilfeld beispielsweise um etwa den Faktor 25 oder von beispielsweise einem sieben mal sieben Teilfeld beispielsweise um etwa den Faktor 49 durchzuführen (nicht gezeigt).

Der Vorteil bei dieser Art von Komprimierung der pixelformatierten Displaydaten 32 ist der, dass der Abstand, auch Hamming Distanz genannt, zwischen zwei sicherheitsrelevanten pixelformatierten Displaydaten 46 so gewählt werden kann, dass die Wahrscheinlichkeit eines falschen Überprüfungsresultats minimiert wird, respektive unter den zulässigen Wert reduziert wird.

Bei Zufuhr ungültiger sicherheitsrelevanter Basisdaten 34 an den Rechner 30, kann dieser beispielsweise die fehlerhafte sicherheitsrelevante Region 13 mit einem "X" versehen, wie in Fig. 3 gestrichelt gezeigt. Der Überprüfer 38 erkennt die vom Rechner mit "X" markierte Region 106 und akzeptiert, dass die sicherheitsrelevanten Basisdaten 34 in dieser Region 106 fehlerhaft sind.

Es ist zu bemerken, dass das Komprimierverfahren 42 die Wahrnehmung des menschlichen Auges, wo Fehler einzelner Pixel in der Regel keine Relevanz haben, berücksichtigt.

In einer weiteren bevorzugten Ausführungsform der vorliegenden Erfindung kann die Kennzeichnung von sicherheitsrelevanten Bildschirmseiten 108 und nichtsicherheitsrelevanten Bildschirmseiten 110 mittels des optischen Markers 28 erfolgen, wie in Fig. 5 und Fig. 6 gezeigt.

Wie im Zusammenhang mit Fig. 1 ausgeführt, wandelt der Rechner 30 die ihm zugeführten sicherheitsrelevanten Basisdaten 34 und die nichtsicherheitsrelevanten Basisdaten 36, also die Basisdaten 12 einer gewählten Bildschirmseite 18, in pixelformatierte Displaydaten 32 um. Die entsprechenden pixelformatierten Displaydaten 32 werden dann dem Bildschirm 14 zur Anzeige zugeführt.

Für den Fall, dass die gewählte sicherheitsrelevante Bildschirmseite 108 die sicherheitsrelevanten pixelformatierten Displaydaten 46 aufweist, kann in die pixelformatierten Displaydaten 32 ein erster optischer Marker 122 integriert werden, wie in Fig. 5 dargestellt.

Für den Fall, dass die gewählte nichtsicherheitsrelevante Bildschirmseite 110 ausschliesslich nichtsicherheitsrelevante pixelformatierte Displaydaten 102 aufweist, kann in die pixelformatierten Displaydaten 32 ein zweiter optischer Marker 124 integriert werden, wie in Fig. 6 dargestellt.

Der erste optische Marker 122 und der zweite optische Marker 124 weisen Informationsmerkmale auf, mit welchen der Überwacher 38 die sicherheitsrelevanten Bildschirmseiten 108 von den nichtsicherheitsrelevanten Bildschirmseiten 110 unterscheiden kann.

Im Konfigurationsmodus 74' müssen dem Überwacher 38, falls der optische Marker 28 verwendet werden soll, entsprechende Markerreferenzdaten einprogrammiert werden. Dementsprechend kann der Überwacher 38 im betriebsbereiten Zustand den optischen Marker 28 während der Überprüfung mit Markerreferenzdaten vergleichen. Falls einerseits der Überwacher 38 feststellt, dass der zweite optische Marker 124 vorhanden ist, wird die Überprüfung ausgeschaltet. Falls jedoch der Überwacher 38 feststellt, dass der erste optische Marker 122 vorhanden ist, oder bei fehlender Übereinstimmung zwischen dem optischen Marker 28 und den Markerreferenzdaten wird eine Kontrolle durchgeführt.

Der optische Marker 28 besteht aus einer Abfolge vordefinierter Pixelmuster 130 und befindet sich insbesondere an einer vordefinierten Stelle in der sicherheitsrelevanten Bildschirmseite 108, wie in Fig. 5 bzw. in der nichtsicherheitsrelevanten Bildschirmseite 110, wie in Fig. 6 gezeigt. Der zweite optische Marker 124 hat eine andere Abfolge von Pixelmustern 130 als der erste optische Marker 122. Die Abfolge und der zeitliche Abstand eines Pixelmusters 130 werden vom Überwacher 38 überwacht. Bei fehlender Übereinstimmung von korrekter Abfolge 128 und/oder zeitlichem Abstand 132 der Pixelmuster 130 mit Markerreferenzdaten führt der Überwacher 38 die Kontrolle durch.

Stellt der Überwacher 38 fest, dass der optische Marker 28 vorhanden ist, wird das Signal 68 an das Anzeigegerät 10 gesendet, um dem Benutzer anzuzeigen, dass und welcher optische Marker 28 vorhanden ist (siehe Fig. 5 und Fig.6). Dies kann beispielsweise durch Einschalten der Marker LED 26 und/oder eines externen Gerätes 70, erfolgen, wie im Zusammenhang mit Fig. 1 erläutert.

Vor Inbetriebnahme des erfindungsgemässen Anzeigegerätes 10 müssen sämtliche Konfigurationsdaten 74' dem Überwacher 38 und dem Rechner 30 zugeführt werden. Der Rechner 30 erhält einen Datensatz an vordefinierten Bildschirmseiten 18, welche vom Benutzer ausgewählt werden können, und der Überwacher 38 erhält den in den oberen Abschnitten besprochenen Referenzdatensatz 78 und die Initialisierungsparameter 80 (siehe Fig. 2).

Im Betrieb kann die gewünschte Bildschirmseite 18 auf dem Bildschirm 14 des Anzeigegerätes 10 durch den Benutzer ausgewählt werden.

Für den Fall, dass ausschliesslich nichtsicherheitsrelevante Displaydaten 102 auf der gewählten Bildschirmseite 110 angezeigt werden und ein zweiter optischer Marker 124 beim Vergleich mit Markerreferenzdaten eine Übereinstimmung aufweist, wird die Überprüfung ausgeschaltet.

Für den Fall, dass sicherheitsrelevante Displaydaten 46 auf der gewählten Bildschirmseite 108 angezeigt werden und somit der erste optische Marker 122 erkannt wurde, sowie bei fehlender Übereinstimmung des ersten optischen Markers 122 mit Markerreferenzdaten, wird die Kontrolle durchgeführt. Bei Feststellen einer fehlerhaften Kontrolle wird die Hintergrundbeleuchtung 23 und die SIL-2 LED 24-ausgeschaltet.

Für den Fall, dass die Bildschirmseiten 18 keinen optischen Marker 28 aufweisen, wird für sicherheitsrelevante Bildschirmseiten 108 und nichtsicherheitsrelevante Bildschirmseiten 110 immer eine Überprüfung durchgeführt.

Wenn bei einer sicherheitsrelevanten Region 13 bei der Überprüfung eine fehlerhafte Übereinstimmung auftritt, werden die Hintergrundbeleuchtung 23 und die SIL-2 LED 24 ausgeschaltet. Optional kann der Fehler auch dem Rechner 30 signalisiert werden, so dass dieser auf der fehlerhaften sicherheitsrelevanten Region 13, anstelle einer Geschwindigkeit beispielsweise ein "X" vermerkt, wie in Fig. 3 gezeigt.

Wenn bei einer sicherheitsrelevanten Region 13 eine einwandfreie Überprüfung durchgeführt wurde, leuchtet die SIL-2 LED 24, und die Hintergrundbeleuchtung 23 bleibt eingeschaltet.

Bei einer weiteren bevorzugten Ausführungsform der vorliegenden Erfindung sind die SIL-2 LED 24 und die Marker LED 26 in einer LED kombiniert, so dass letztere immer dann eingeschaltet ist, wenn sowohl die Bedingungen zum Einschalten der Marker LED 26 wie auch die Bedingungen zum Einschalten der SIL-2 LED 24 erfüllt sind.

## Patentansprüche

1. Verfahren zur Kennzeichnung sicherheitsrelevanter und nichtsicherheitsrelevanter Bildschirmseiten auf einem Anzeigegerät (10), insbesondere einem LCD Monitor im Führerstand eines Fahrzeuges, mittels eines optischen Markers (28),
- bei dem ein Rechner (30) aus zugeführten sicherheitsrelevanten und nichtsicherheitsrelevanten Basisdaten (32, 34) die einer gewählten Bildschirmseite (18) zugeordneten Basisdaten (12) in pixelformatierte Displaydaten (32) umwandelt und die pixelformatierten Displaydaten (32) einem Bildschirm (14) des Anzeigegerätes (10) zur Anzeige zugeführt werden,
- der Rechner (30) für den Fall, dass die gewählte Bildschirmseite (108) sicherheitsrelevante Displaydaten (46) aufweist, in die pixelformatierten Displaydaten (32) einen ersten optischen Marker (122) integriert,
- der Rechner für den Fall, dass die gewählte Bildschirmseite (110) ausschliesslich nicht sicherheitsrelevante Displaydaten (102) aufweist, in die pixelformatierten Displaydaten (32) einen zweiten optischen Marker (124) integriert,
- der erste und der zweite optische Marker (122, 124) Informationsmerkmale aufweisen, mit welchen ein Überwacher (38) die sicherheitsrelevanten Bildschirmseiten (108) von den nichtsicherheitsrelevanten Bildschirmseiten (110) unterscheidet,
- bei dem die pixelformatierten Displaydaten (32) vor dem Anzeigegerät (10) abgegriffen und dem Überwacher (38) zur Überprüfung der allenfalls der ausgewählten Bildschirmseite (108) zugeordneten sicherheitsrelevanten pixelformatierten Displaydaten (46) zugeführt werden, und
- bei dem der Überwacher (38) den in den ihm zugeführten pixelformatierten Displaydaten (32) integrierten optischen Marker (28) mit vordefinierten Markerreferenzdaten vergleicht und bei Feststellen des Vorhandenseins des zweiten optischen Markers (124) die Überprüfung ausschaltet und bei Feststellen des Vorhandenseins des ersten optischen Markers (122) sowie bei fehlender Übereinstimmung des optischen Markers (28) mit den Markerreferenzdaten eine Kontrolle durchführt.

2. Verfahren nach Anspruch 1, **dadurch gekennzeichnet, dass** der in den pixelformatierten Displaydaten (32) integrierte optische Marker (28) aus einer Abfolge vordefinierter Pixelmuster (130) besteht und sich insbesondere an einer fest definierten Stelle auf den Bildschirmseiten (18) befindet.

3. Verfahren nach Anspruch 2, **dadurch gekennzeichnet, dass** der zweite optische Marker (124) eine andere Abfolge von Pixelmustern (130) aufweist als der erste optische Marker (122).

4. Verfahren nach Anspruch 2 oder 3, **dadurch gekennzeichnet, dass** der Überwacher (38) die Abfolge der Pixelmuster (130) des optischen Markers (28) überwacht.

5. Verfahren nach einem der Ansprüche 2 bis 4, **dadurch gekennzeichnet, dass** der Überwacher (38) den zeitlichen Abstand der Pixelmuster (130) des optischen Markers (28) überwacht.

6. Verfahren nach Anspruch 4, **dadurch gekennzeichnet, dass** der Überwacher (38) bei fehlender Übereinstimmung der Abfolge der Pixelmuster (130) des optischen Markers (28) mit Markerreferenzdaten die Kontrolle durchführt.

7. Verfahren nach Anspruch 5, **dadurch gekennzeichnet, dass** der Überwacher (38) bei fehlender Übereinstimmung des zeitlichen Abstandes der Pixelmuster (130) des optischen Markers (28) mit Markerreferenzdaten die Kontrolle durchführt.

8. Verfahren nach einem der Ansprüche 1 bis 7, **dadurch gekennzeichnet, dass** der Überwacher (38) bei Feststellen des Vorhandenseins eines optischen Markers (28) ein Signal an das Anzeigegerät und/oder an ein externes Gerät (70) sendet, um dem Benutzer anzuzeigen, das und welcher optische Marker (28) vorhanden ist, beispielsweise durch Einschalten einer Markeranzeigelampe, insbesondere einer Marker LED (26).

## Claims

1. Method for flagging safety-relevant and non-safety-relevant screen pages on a display unit (10), particularly an LCD monitor in the driver's cab of a vehicle, by means of a visual marker (28),
- in which a computer (30) takes supplied safety-relevant and non-safety-relevant base data (32, 34) and converts the base data (12) which are associated with a chosen screen page (18) into pixel-formatted display data (32), and the pixel-formatted display data (32) are supplied to a screen (14) of the display unit (10) for display,
- if the chosen screen page (108) has safety-relevant display data (46) then the computer (30) integrates a first visual marker (122) into the pixel-formatted display data (32),
- if the chosen screen page (110) has exclusively non-safety-relevant display data (102) then the computer integrates a second visual marker (124) into the pixel-formatted display data (32),
- the first and second visual markers (122, 124) have information features which a monitoring arrangement (38) uses to distinguish the safety-relevant screen pages (108) from the non-safety-relevant screen pages (110),
- in which the pixel-formatted display data (32) are tapped off upstream of the display unit (10) and are supplied to the monitoring arrangement (38) for the purpose of checking the safety-relevant pixel-formatted display data (46) which are at most associated with the selected screen page (108), and
- in which the monitoring arrangement (38) compares the visual marker (28) integrated in the pixel-formatted display data (32) supplied to said monitoring arrangement with predefined marker reference data and, if the second visual marker (124) is found to be present, turns off the check and, if the first visual marker (122) is found to be present and if the visual marker (28) does not match the marker reference data, performs an inspection.

2. Method according to Claim 1, **characterized in that** the visual marker (28) integrated in the pixel-formatted display data (32) comprises a sequence of predefined pixel patterns (130) and is located particularly at a firmly defined position on the screen pages (18).

3. Method according to Claim 2, **characterized in that** the second visual marker (124) has a different sequence of pixel patterns (130) from the first visual marker (122).

4. Method according to Claim 2 or 3, **characterized in that** the monitoring arrangement (38) monitors the sequence of the pixel patterns (130) of the visual marker (28).

5. Method according to one of Claims 2 to 4, **characterized in that** the monitoring arrangement (38) monitors the interval of time between the pixel patterns (130) of the visual marker (28).

6. Method according to Claim 4, **characterized in that** the monitoring arrangement (38) performs the inspection if the sequence of the pixel patterns (130) of the visual marker (28) does not match marker reference data.

7. Method according to Claim 5, **characterized in that** the monitoring arrangement (38) performs the inspection if the interval of time between the pixel patterns (130) of the visual marker (28) does not match marker reference data.

8. Method according to one of Claims 1 to 7, **characterized in that** the monitoring arrangement (38) sends a signal to the display unit and/or to an external appliance (70) when a visual marker (28) is found to be present in order to indicate to the user that a visual marker (28) is present, and which one, for example by turning on a marker indicator lamp, particularly a marker LED (26).

## Revendications

1. Procédé de marquage de pages d'écran relatives et non relatives à la sécurité sur un appareil d'affichage (10), notamment sur un moniteur LCD du poste de conduite d'un véhicule, au moyen d'un marqueur optique (28),
- dans lequel un ordinateur (30), à partir de données de base (32, 34) relatives et non relatives à la sécurité qui lui sont acheminées, convertit les données de base (12) affectées à une page d'écran choisie (18) en données d'affichage (32) formatées en pixels et les données d'affichage (32) formatées en pixels sont acheminées pour affichage vers un écran (14) de l'appareil d'affichage (10),
- dans le cas où la page d'écran (108) choisie comporte des données d'affichage (46) relatives à la sécurité, l'ordinateur (30) intègre un premier marqueur optique (122) dans les données d'affichage (32) formatées en pixels,
- dans le cas où la page d'écran (110) choisie comporte exclusivement des données d'affichage (102) non relatives à la sécurité, l'ordinateur intègre un deuxième marqueur optique (124) dans les données d'affichage (32) formatées en pixels,
- le premier et le deuxième marqueur optique (122, 124) comportent des caractéristiques d'information permettant à un contrôleur (38) de distinguer les pages d'écran (108) relatives à la sécurité des pages d'écran (110) non relatives à la sécurité,
- dans lequel les données d'affichage (32) formatées en pixels sont prélevées avant l'appareil d'affichage (10) et sont acheminées vers le contrôleur (38) pour la vérification éventuelle des données d'affichage (46) relatives à la sécurité formatées en pixels affectées à la page d'écran (108) choisie, et
- dans lequel le contrôleur (38) compare le marqueur optique (28) intégré dans les données d'affichage (32) formatées en pixels qui lui sont acheminées, avec des données prédéfinies de référence de marquage et lorsqu'il constate la présence du deuxième marqueur optique (124) il arrête la vérification et lorsqu'il constate la présence du premier marqueur optique (122) de même qu'en l'absence de concordance du marqueur optique (28) avec les données de référence de marquage, il effectue un contrôle.

2. Procédé selon la revendication 1, **caractérisé en ce que** le marqueur optique (28) intégré dans les données d'affichage (32) formatées en pixels est constitué d'une suite de motifs de pixels (130) prédéfinis et qu'il se trouve notamment à un emplacement bien défini sur les côtés (18) de l'écran.

3. Procédé selon la revendication 2, **caractérisé en ce que** le deuxième marqueur optique (124) est constitué d'une autre suite de motifs de pixels (130) que le premier marqueur optique (122).

4. Procédé selon la revendication 2 ou 3, **caractérisé en ce que** le contrôleur (38) surveille la suite de motifs de pixels (130) du marqueur optique (28).

5. Procédé selon une des revendications 2 à 4, **caractérisé en ce que** le contrôleur (38) surveille l'écart temporel des motifs de pixels (130) du marqueur optique (28).

6. Procédé selon la revendication 4, **caractérisé en ce que** le contrôleur (38) effectue le contrôle en l'absence de concordance de la suite de motifs de pixels (130) du marqueur optique (28) avec les données de référence de marquage.

7. Procédé selon la revendication 5, **caractérisé en ce que** le contrôleur (38) effectue le contrôle en l'absence de concordance de l'écart temporel des motifs de pixels (130) du marqueur optique (28) avec les données de référence de marquage.

8. Procédé selon une des revendications 1 à 7, **caractérisé en ce que** le contrôleur (38) émet un signal vers l'appareil d'affichage et/ou vers un appareil externe (70) lorsqu'il constate la présence d'un marqueur optique (28) pour indiquer à l'utilisateur la présence et la nature du marqueur optique (28), par exemple par l'allumage d'une lampe indiquant le marqueur, notamment un marqueur LED (26).
